# FASCICULE DE BREVET EUROPEEN

(11) **EP 2 142 956 B1**
(45) Date de publication et mention de la délivrance du brevet: **20.11.2013**
(21) Numéro de dépôt: 08787930.0
(22) Date de dépôt: 10.04.2008
(51) Int. Cl.: G02C 11/06, H04R 1/10, H04R 25/00, H04R 5/033, H04R 25/02

(54) **Élément pour la transmission à l'oreille du son d'un haut-parleur et équipements munis d'un tel élément**
Element zur Übertragung des Klangs eines Lautsprechers zum Ohr und Vorrichtung mit einem solchen Element
Member for transmitting the sound of a loud-speaker to the ear and equipment fitted with such member

(30) Priorité: 10.04.2007 FR 0702586; 02.07.2007 FR 0704751
(43) Date de publication de la demande: 13.01.2010
(73) Titulaire: Chene, Richard, 92200 Neuilly-sur-Seine (FR); Delamour, Dominique, 78490 Les Mesnuls (FR); Miklitarian, Alain, 75014 Paris (FR); Rodi, Olivier, 78950 Gambais (FR)
(72) Inventeur: Chene, Richard, 92200 Neuilly-sur-Seine (FR); Delamour, Dominique, 78490 Les Mesnuls (FR); Miklitarian, Alain, 75014 Paris (FR); Rodi, Olivier, 78950 Gambais (FR)
(74) Mandataire: Plaçais, Jean Yves
(86) Numéro de dépôt international: PCT/FR2008/000495
(87) Numéro de publication internationale: WO 2008/142274

(56) Documents cités:
- WO-A1-97/27721
- CH-A5- 673 365
- DE-A1- 10 201 324
- DE-B3-102005 008 319
- DE-U1-202004 003 078
- US-A- 2 545 731
- US-A- 3 618 698
- US-A1- 2003 231 783
- US-A1- 2004 160 572
- US-A1- 2005 248 717

## Description

La présente invention concerne un élément pour la transmission à l'oreille du son d'un haut-parleur.

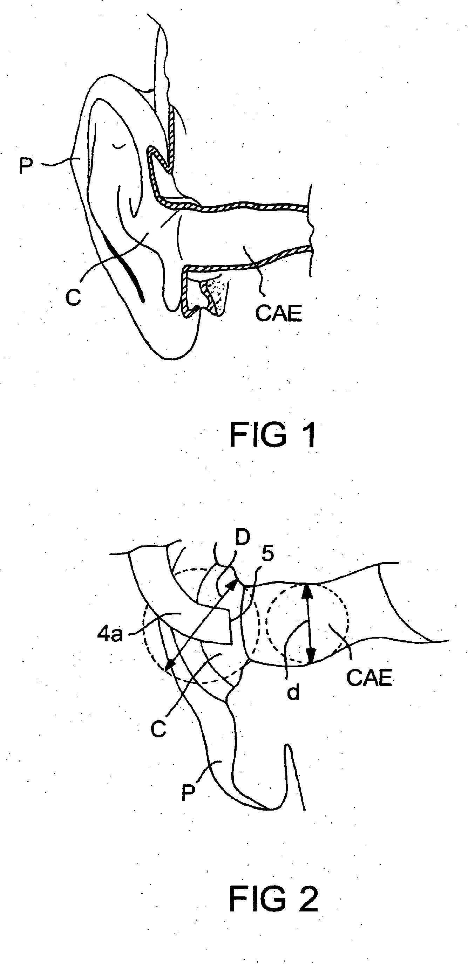

Avant d'évoquer l'art antérieur, on décrira brièvement, en référence à la figure 1, l'anatomie de la partie de l'oreille qui est concernée par l'invention, à savoir l'oreille externe : elle comprend le pavillon P, la conque C et le conduit auditif externe CAE.

Il existe de nombreux dispositifs conçus pour transmettre une onde sonore à l'entrée de l'oreille, dispositifs que l'on peut classer en trois grandes catégories :
les casques audio,
les oreillettes, écouteurs et audioprothèses obstructives, et
les audioprothèses non-obstructives.

Les casques audio permettent d'utiliser des haut-parleurs de bonne qualité mais ils ont l'inconvénient de ne pas être discrets, d'obstruer le pavillon de l'oreille en venant le coiffer et d'exercer sur ce pavillon une pression qui finit par devenir inconfortable.

Dans les oreillettes, écouteurs et audioprothèses obstructives, le haut-parleur est logé et maintenu, par contact, à l'entrée du conduit auditif externe et, si ces articles ont l'avantage d'être discrets, en revanche, ils ont l'inconvénient d'utiliser nécessairement des haut-parleurs de petites dimensions, peu performants (notamment dans les sons graves), d'être inconfortables et d'obstruer le conduit auditif externe avec les problèmes que cela entraîne tels que : effet de résonance de sa propre voix ou des sons de mastication, absence d'échappatoire pour les niveaux de pression sonore élevés, barrière à l'audition des bruits environnants, etc.

Les audioprothèses non-occlusives utilisent, pour le maintien en place, une pièce comportant au moins un passage mettant en communication le conduit auditif externe et le milieu ambiant, pièce qui vient se loger à l'entrée du conduit auditif externe et s'applique contre ses parois. Une audioprothèse appartenant à ce type utilise, pour la transmission du son, un tube capillaire destiné à être aussi discret que possible et, pour le tenir en place, elle a recours à un dôme ajouré qui vient se loger à l'entrée du conduit auditif externe et prend appui sur ses parois. Un fil en matière plastique formant ramification à partir du tube capillaire, au voisinage du dôme, est en outre prévu pour être placé dans la conque de l'oreille pour assurer la stabilité de l'ensemble.

Il existe enfin des dispositifs qui visent à transmettre une onde sonore sans faire vibrer la colonne d'air qu'entoure le conduit auditif externe (transmission osseuse sous l'effet d'un vibreur). Ces dispositifs nécessitent de fortes pressions au niveau du vibreur et sont d'une qualité sonore limitée par l'impédance des os et l'effet d'amortissement de la peau.

La présente invention a pour objectif d'offrir un élément pour la transmission à l'oreille du son d'un haut-parleur qui ne présente aucun des inconvénients mentionnés ci-dessus et qui, en outre, améliore la restitution sonore.

A cette fin, l'élément comporte :
une partie proximale munie de, ou formant, un moyen de solidarisation adapté à une réunion rigide avec un équipement comportant des moyens pour une immobilisation par rapport à la tête d'un porteur, et
une partie distale adaptée à diriger le son dans le conduit auditif externe, ladite partie distale comportant une extrémité distale adaptée à venir se placer dans la conque de l'oreille, face à l'entrée du conduit auditif externe, et étant dépourvue de moyen pour établir une immobilisation par contact avec une partie quelconque de l'oreille,
caractérisé en ce que
le long d'au moins une partie de son extrémité distale, ledit élément est accolé, à une pièce amovible présentant une cavité formant chambre creuse s'ouvrant vers ladite conque,
ledit élément et ladite pièce comporte des moyens de connexion mutuelle mâle et femelle, ou l'inverse, permettant la réunion temporaire de l'un à l'autre,
lesdits moyens de connexion mutuelle sont constitués par une tige saillant depuis la paroi dudit élément et un passage ménagé dans la paroi de ladite pièce, ladite tige étant adaptée à être reçue à frottement doux dans ledit passage,
les qualificatifs proximal et distal faisant référence à la position relative par rapport audit équipement.

Ainsi, l'élément selon l'invention ne pénètre pas dans le conduit auditif externe et l'extrémité distale de sa partie distale tient en place, non pas en venant se bloquer contre une partie de l'oreille, mais sans contact, grâce au montage rigide de l'élément sur l'équipement immobilisé sur la tête du porteur.

En outre, la chambre creuse, ou résonateur, forme avec la conque une chambre acoustique donnant au son un volume et une qualité incomparables.

On connaît, certes, d'après DE 102 01 324, une oreillette pour téléphone mobile comportant, pour la transmission du son, un tuyau souple 3, mais ce tuyau est monté sur une pièce 2 qui appartient à un moyen d'immobilisation sur la tête d'un porteur sans faire partie de l'élément de transmission des signaux proprement dit et, de surcroît, l'extrémité libre du tuyau est prévue pour être enfilée dans ledit conduit auditif externe du porteur, de sorte que le tuyau s'appuie nécessairement élastiquement contre la paroi du conduit auditif.

D'autres dispositifs similaires sont connus d'après US 2005/0248717, CH 673 365 et DE 10 2005 008 319 B3 mais aucun n'enseigne clairement la position relative de l'extrémité libre du conduit de tranmission du son et l'entrée du conduit auditif externe du porteur.

De son côté, US 2003/0231783 divulgue une chambre creuse à placer dans la coque de l'oreille, mais associée à d'autres moyens que ceux de l'invention.

Dans une forme d'exécution pratique, le fond de la cavité formant chambre creuse est sensiblement en portion de sphère.

Bien que le risque de surpression sonore soit tout à fait limité du fait qu'une partie de la conque reste ouverte vers l'extérieur en laissant une sortie aux surpressions éventuelles, tout en permettant de recevoir les sons externes, la paroi de ladite pièce formant chambre creuse est avantageusement traversée, par sécurité, d'un mince passage mettant en communication ladite cavité et le milieu ambiant, côté opposé à ladite conque.

Avantageusement, ledit passage est traversant et ladite tige a une longueur telle qu'elle déborde suffisamment dudit passage pour servir de moyen de connexion à un autre accessoire, accessoire qui peut former surface d'isolation sonore.

Cette surface d'isolation, qui peut être de forme quelconque, par exemple parabolique, a pour objectif de limiter l'arrivée des sons externes sans empêcher l'évacuation des ondes de surpression provenant des sons reçus à l'oreille via l'élément selon l'invention.

L'équipement, auquel il est fait référence, dans la définition de l'invention, peut être une branche électronique appartenant à une monture de lunettes (optique, solaire, de sécurité, de ski ou autre sport), une oreillette, une boucle d'oreille à clip, un bandeau, un serre-tête, un casque audio, une visière indépendante ou de casquette, un casque protecteur tel qu'un casque de motocycliste ou de pompier, ou encore une audioprothèse, cette liste d'exemples n'étant pas limitative.

Du fait qu'il n'est pas obstructif, l'élément selon l'invention ne vient pas perturber le sens de l'équilibre du porteur, offre une échappatoire pour les niveaux de pression sonores élevés et permet d'entendre les bruits courants. Et du fait qu'il est "sans contact", il est parfaitement confortable.

Dans une première forme d'exécution de l'invention, l'élément est creux et le haut-parleur est placé côté extrémité proximale de la partie proximale de l'élément.

Cette forme d'exécution permet d'utiliser une large variété de haut-parleurs, y compris de grand diamètre, de tels grands haut-parleurs pouvant être déportés.

Pour faciliter l'adaptation à la morphologie du porteur, l'extrémité distale de la partie distale de l'élément peut inclure une terminaison sécable à la longueur voulue.

Dans une autre forme d'exécution, l'élément inclut, côté distal, un embout amovible solidarisable à la partieproximale attenante dudit élément, par exemple, par emboîtement. Un tel embout amovible peut être utile pour pourvoir la partie attenante d'un embout dont le diamètre sera mieux adapté à la taille de la conque du porteur. La possibilité de remplacer un embout par un autre peut également être souhaitable à des fins d'hygiène, si l'équipement muni de l'élément selon l'invention est tantôt utilisé par une personne tantôt par une autre.

De préférence, ledit embout est monté rotatif autour de l'axe longitudinal de ladite partie attenante pour faciliter l'orientation de l'embouchure de l'extrémité distale de la partie distale par rapport à l'entrée du conduit auditif.

Dans une deuxième forme d'exécution, l'élément selon l'invention est plein et le haut-parleur est placé côté extrémité distale de la partie distale de l'élément. En d'autres termes, le haut-parleur est placé dans la conque, toujours sans contact. Il est bien entendu que, lorsque l'on dit que l'élément est plein, c'est sous réserve du passage nécessaire à la connexion du haut-parleur avec sa source de signaux électriques.

Que l'élément selon l'invention soit creux ou plein, il a, de préférence, une section comprise entre 3,2 et 40 mm2 de sorte que, lorsqu'il est placé dans la conque, sans y être enfoncé, une zone périphérique reste ouverte tout autour de l'extrémité distale de sa partie distale.

Dans une forme d'exécution préférée, à des fins d'adaptation au porteur, l'élément est déformable sous l'action d'une force exercée délibérément, mais conserve, dans des conditions normales de service, la forme qui lui a ainsi été donnée par déformation.

Dans cet objectif, selon une première possibilité, l'élément en un matériau thermoplastique. Il suffit dans ce cas de le ramollir à la chaleur pour lui donner la forme voulue qu'il conservera au refroidissement.

Selon une autre possibilité, l'élément est en une matière souple renfermant une armature déformable, par exemple un fil ou une gaine métallique.

L'élément a de préférence une forme telle qu'en service, l'extrémité distale de sa partie distale est sensiblement orthogonale au plan temporo-mandibulaire du porteur.

Enfin, la paroi de la pièce formant chambre creuse peut avoir une forme appropriée pour renfermer des composants électroniques, par exemple l'électronique d'une prothèse auditive, ou encore l'électronique destinée à analyser le son reçu du milieu ambiant et le traiter en temps réel pour l'annuler par un contre-bruit correspondant, selon des techniques qui sont connues, le contre-bruit étant émis dans la chambre creuse par l'électronique contenue dans la paroi de ladite chambre.

L'invention est décrite ci-après avec davantage de détails par référence aux dessins annexés dans lesquels :
- la figure 1 est un schéma montrant une coupe partielle de l'oreille externe ;
- la figure 2 est un schéma montrant la position, en service, de l'extrémité distale de la partie distale d'une forme d'exécution de l'invention :
- la figure 3a est un schéma montrant une variante d'exécution de l'extrémité distale de ladite partie distale et la figure 3b est une vue en bout de cette extrémité distale ;
- la figure 4 est une vue en perspective partielle d'une branche "électronique" pour monture de lunettes pourvue d'un élément selon l'invention ;
- la figure 5 est un schéma, à plus grande échelle, illustrant la relation entre l'embout de la partie distale et la partie attenante dans la forme d'exécution de la figure 4 ;
- la figure 6 est un schéma illustrant le cas d'une boucle d'oreille équipée d'un élément selon l'invention
- la figure 7 est un schéma illustrant, en place, un élément de transmission du son muni d'une chambre creuse ou résonateur ;
- la figure 8 est une vue semblable à la figure 7, montrant, en outre, une surface d'isolation montée sur ladite chambre creuse, et
- la figure 9 est une représentation, en perspective, d'une oreillette équipée selon l'invention.

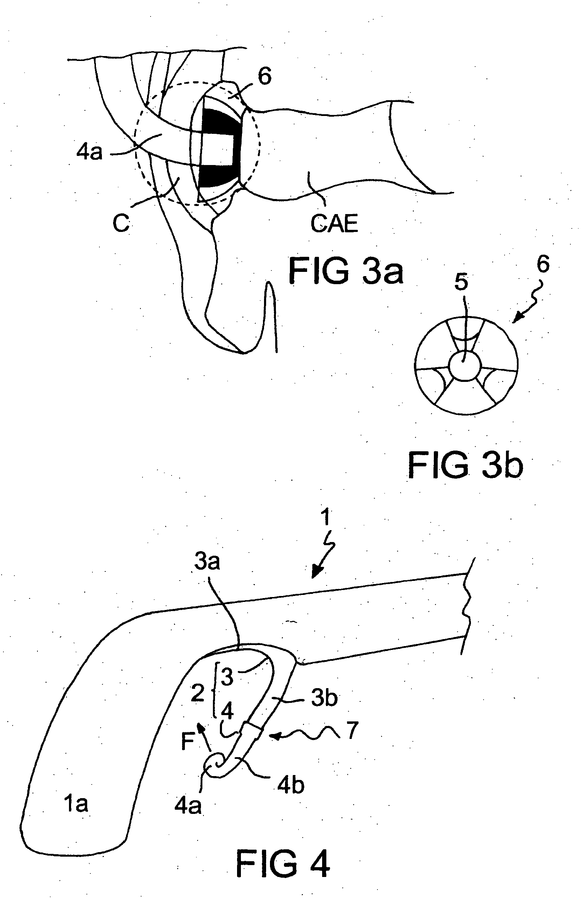

Pour une meilleure compréhension de la suite, on se référera rapidement à la figure 4 qui montre une branche de lunettes 1 équipée d'un élément 2 selon l'invention. Cet élément 2 comporte une partie proximale 3 qui est solidarisée à la branche 1, laquelle renferme les moyens voulus pour l'émission de sons, et une partie distale 4 dont l'extrémité distale 4a débouche à l'extérieur selon la flèche F.

Il convient de se référer ensuite à la figure 1 qui montre, comme indiqué dans l'introduction, que l'oreille externe comprend le pavillon P, la conque C et le conduit auditif externe CAE.

Sur la figure 2, ces mêmes parties ont été représentées de façon simplifiée avec, en place, l'extrémité distale 4a de la partie distale d'une forme d'exécution de l'invention. Comme on le voit, la taille de la conque C peut être figurée par celle d'une sphère susceptible de s'y loger et cette sphère a généralement un diamètre D compris entre 8 et 15 mm. De même, la taille du conduit auditif externe CAE peut être figurée par celle d'une sphère susceptible de s'y loger et cette sphère a généralement un diamètre d compris entre 5 et 8 mm. La figure 2 montre clairement que l'extrémité distale 4a pénètre dans la conque C et débouche selon 5 dans l'axe du conduit auditif externe CAE sans prendre appui ni sur le pavillon P, ni sur les parois de la conque C. Il est clair également que l'extrémité distale 4a ne pénètre pas dans le conduit auditif externe CAE. Par construction, l'extrémité 4a peut être plus longue qu'il est représenté et être coupée à la longueur voulue pour ne pas pénétrer dans le conduit CAE. Le diamètre de l'extrémité distale 4a est compris entre 2 et 7 mm.

La figure 3a montre une variante d'exécution dans laquelle l'embouchure de l'extrémité distale 4a est pourvue d'une corolle 6 en portion de sphère à trois pétales séparés par des quartiers vides, pour laisser le maximum de passage libre entre le conduit auditif externe CAE et la conque C. Cette corolle a une fonction de protection du conduit CAE : en service, elle n'est pas en contact avec le conduit CAE, mais s'il advenait qu'une force tendant à enfoncer l'extrémité distale 4a dans le conduit CAE soit accidentellement exercée sur l'élément selon l'invention, la corolle 6 qui est d'un diamètre plus grand que celui de l'entrée du conduit CAE viendrait buter sur la paroi périphérique de cette entrée, empêchant un tel enfoncement.

Si l'on revient à la figure 4, on voit que la partie proximale 3 de l'élément 2 selon l'invention revêt sensiblement la forme d'un U couché dont une aile 3a est alignée avec la branche de lunettes 1 et solidarisée à celle-ci et dont l'autre aile 3b est emboîtée dans un embout 4b dont l'extrémité libre constitue l'extrémité distale 4a de l'élément. L'embout 4b est monté rotatif en 7 sur la partie attenante 3b, ce qui permet de l'orienter de telle sorte qu'en service, son extrémité libre 4a soit sensiblement orthogonale au plan occupé par la branche de lunettes, c'est-à-dire le plan temporo-maxilaire du porteur. L'élément 2 est creux et il transmet à l'entrée du conduit CAE le son qu'il reçoit d'un haut-parleur inclus dans le retour 1a de la branche.

L'élément 2 peut être, par exemple, en Nylon, en acrylonitrile-butadiène-styrène ou tout autre matériau équivalent qui apparaîtra à l'homme de l'art.

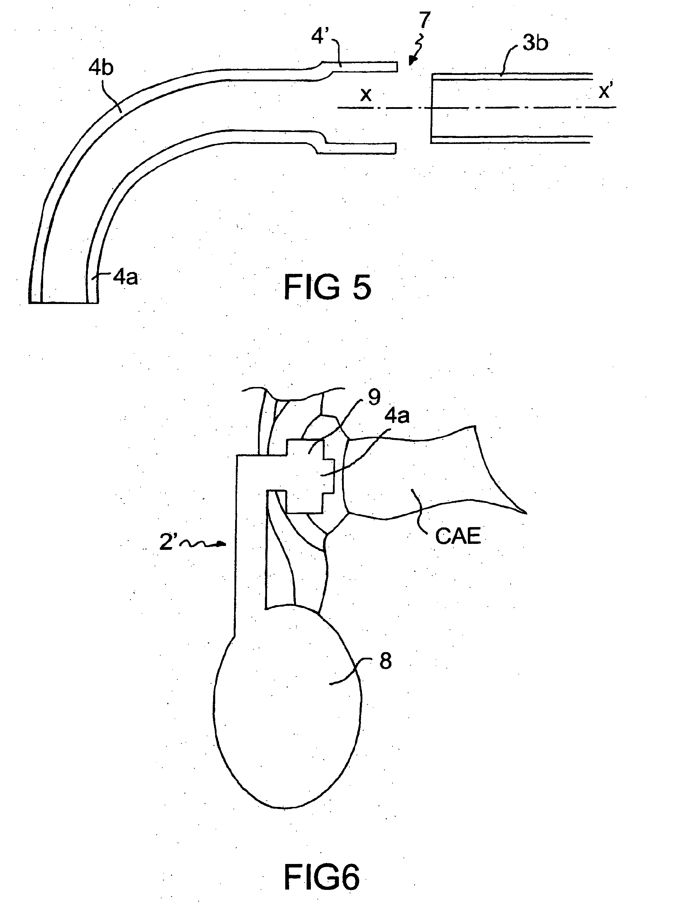

La figure 5 montre le principe du montage entre l'embout 4b et la partie attenante 3b. Comme on le voit, l'embout 4b comporte une zone de section élargie 4' adaptée à recevoir la partie attenante 3b et à tourner autour de l'axe longitudinal X-X' de cette dernière. Des moyens d'encliquetage non représentés évitent la désolidarisation intempestive des deux pièces.

La figure 6 montre une autre forme d'exécution possible de l'invention. Dans ce cas, l'équipement auquel est solidarisé l'élément 2' selon l'invention est une boucle d'oreille clip 8, ledit élément 2' est plein et le haut-parleur 9 est situé côté extrémité distale 4a de l'élément.

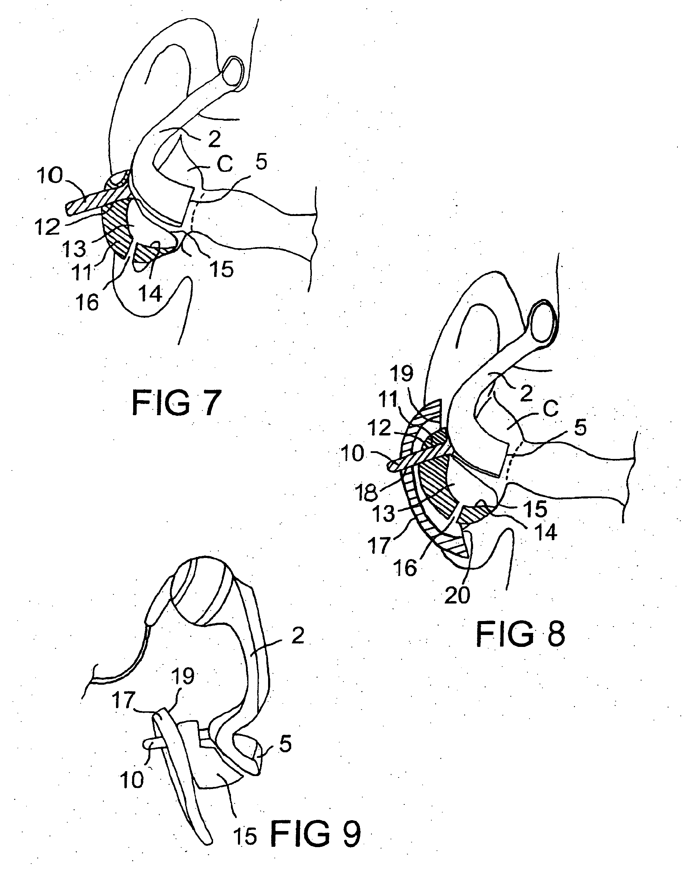

Si l'on en vient à la figure 7, on y retrouve l'élément 2 débouchant selon 5 dans la conque C. Dans ce cas cependant, l'élément 2 est pourvu d'une tige 10 sur laquelle est enfilée, à frottement doux, une pièce 11 percée, à cet effet, d'un passage traversant 12. La pièce 11 comporte une cavité 13 dont le fond 14 est sensiblement en portion de sphère et qui s'ouvre selon 15 vers la conque C. Comme on le voit, la pièce 11 est ainsi accolée à l'élément 2 et son extrémité opposée au passage 12 vient se placer en bordure de la conque au-dessous du débouché 5 de l'élément 2. La conque C reste néanmoins ouverte vers l'extérieur dans sa zone supérieure C'.

La cavité 13 forme, avec la conque C, une chambre acoustique d'un volume supérieur à celui de la conque, améliorant ainsi grandement le volume du son et sa qualité.

Un mince passage 16 met en communication la cavité 13 et le milieu ambiant, à l'opposé de la conque, pour permettre, à des fins de sécurité, l'évacuation d'éventuelles mais improbables surpressions sonores.

Dans l'épaisseur de la paroi de la pièce 11, il peut être ménagé un logement renfermant des composants électroniques ou, en variante, de tels composants peuvent être noyés dans la matière de cette paroi.

Comme on le voit à la figure 6, la tige 10 fait saillie à l'extérieur de la pièce 11. Cela permet de monter un accessoire, pourvu à cet effet d'un passage traversant ou borgne. Un tel accessoire 17 pourvu d'un passage traversant 18 est représenté en place à la figure 7 : il s'agit d'une surface d'isolation qui débouche, d'une part, vers la conque C selon 19 et, d'autre part, vers le milieu ambiant, selon 20.

Dans la vue en perspective de la figure 8, montrant une oreillette équipée selon l'invention, on retrouve l'élément 2 débouchant selon 5, la pièce 11 formant chambre creuse et la surface d'isolation 17 montées sur la tige 10.

Il est bien entendu que l'invention n'est pas limitée aux formes d'exécution décrites et représentées. Ainsi, le recours à un élément plein pourvu, à son extrémité distale, d'un haut-parleur n'est pas limité au cas où l'équipement porteur est une boucle d'oreille : il pourrait tout aussi bien s'agir d'une branche de lunettes, d'un casque de motocycliste ou autre. Par ailleurs, au lieu d'être enfilé sur une tige, la pièce 11 et/ou l'accessoire 17 pourrait être réunis par un système type bouton-pression ou autre. De plus, au lieu d'être amovible la pièce 11 pourrait solidarisée à demeure à l'élément 2. De même, la surface d'isolation 17 pourrait solidarisée à demeure à la pièce 11.

## Revendications

1. Elément (2) pour la transmission à l'oreille du son d'un haut-parleur, comportant :
une partie proximale (3) munie de, ou formant, un moyen de solidarisation adapté à une réunion rigide avec un équipement (1) comportant des moyens pour une immobilisation par rapport à la tête d'un porteur, et
une partie distale (4) adaptée à diriger le son dans le conduit auditif externe (CAE), ladite partie distale (4) comportant une extrémité distale (4a) adaptée à venir se placer dans la conque (C) de l'oreille, face à l'entrée du conduit auditif externe, et étant dépourvue de moyen pour établir une immobilisation par contact avec une partie quelconque de l'oreille,
**caractérisé en ce que**
le long d'au moins une partie de son extrémité distale (4a), ledit élément (2) est accolé, à une pièce (11) amovible présentant une cavité (13) formant chambre creuse s'ouvrant vers ladite conque (C),
ledit élément (2) et ladite pièce (11) comportent des moyens de connexion mutuelle mâle et femelle (10,12), ou l'inverse, permettant la réunion temporaire de l'un à l'autre,
lesdits moyens de connexion mutuelle sont constitués par une tige (10) saillant depuis la paroi dudit élément (2) et un passage (12) ménagé dans la paroi de ladite pièce (11), ladite tige étant adaptée à être reçue à frottement doux dans ledit passage,
les qualificatifs proximal et distal faisant référence à la position relative par rapport audit équipement.

2. Elément selon la revendication 1, **caractérisé en ce que**, en service, l'extrémité distale (4a) de sa partie distale (4) est sensiblement orthogonale au plan temporo-mandibulaire du porteur.

3. Elément selon la revendication 1 ou 2, **caractérisé en ce qu'**il est creux et **en ce que** ledit haut-parleur est placé côté extrémité proximale de la partie proximale (3) de l'élément.

4. Elément selon l'une quelconque des revendications 1 à 3, **caractérisé en ce que** l'extrémité distale (4a) de sa partie distale (4) inclut une terminaison sécable.

5. Elément selon l'une quelconque des revendications 1 à 3, **caractérisé en ce qu'**il inclut, côté distal, un embout (4b) amovible solidarisable à la partie proximale attenante (3b) dudit élément.

6. Elément selon la revendication 5, **caractérisé en ce que** ledit embout (4b) est monté rotatif autour de l'axe longitudinal (X-X') de ladite partie attenante (3b).

7. Elément selon la revendication 1 ou 2, **caractérisé en ce qu'**il est plein et **en ce que** ledit haut-parleur (9) est placé côté extrémité distale (4a) de la partie distale (4) de l'élément.

8. Elément selon l'une quelconque des revendications 1 à 7, **caractérisé en ce qu'**il a une section comprise entre 3,2 et 40 mm².

9. Elément selon l'une quelconque des revendications 1 à 8, **caractérisé en ce que**, sous l'action d'une force exercée délibérément, il est déformable à des fins d'adaptation au porteur, mais conserve, dans des conditions normales de service, la forme qui lui a ainsi été donnée par déformation.

10. Elément selon la revendication 9, **caractérisé en ce qu'**il est en un matériau thermoplastique.

11. Elément selon la revendication 9, **caractérisé en ce qu'**il est en une matière souple renfermant une armature déformable.

12. Elément selon l'une quelconque des revendications 1 à 11, **caractérisé en ce que** le fond (14) de ladite cavité (13) est sensiblement en portion de sphère.

13. Elément selon l'une quelconque desrevendications 1 à 12, **caractérisé en ce que** la paroi de la pièce (11) est traversée d'un mince passage (16) mettant en communication ladite cavité (13) et le milieu ambiant, côté opposé à ladite conque (C).

14. Elément selon l'une quelconque des revendications 1 à 13, **caractérisé en ce que** ledit passage (12) est traversant et **en ce que** ladite tige (10) à une longueur telle qu'elle déborde suffisamment dudit passage pour servir de moyens de connexion à un autre accessoire (17).

15. Elément selon la revendication 14, **caractérisé en ce que** ledit autre accessoire (17) forme surface d'isolation sonore.

16. Elément selon l'une quelconque des revendications 1 à 15, **caractérisé en ce que** la paroi de la pièce (11) renferme des composants électroniques.

17. Branche électronique ou monture de lunettes comprenant une telle branche, **caractérisée en ce qu'**elle est équipée d'un élément selon l'une quelconque des revendications 1 à 16.

18. Oreillette équipée d'un élément selon l'une quelconque des revendications 1 à 16.

19. Boucle d'oreille équipée d'un élément selon l'une quelconque des revendications 1 à 16.

20. Bandeau, serre-tête, casque audio ou visière équipé d'un élément selon l'une quelconque des revendications 1 à 16.

21. Casque protecteur équipé d'un élément selon l'une quelconque des revendications 1 à 16.

22. Audioprothèse équipée d'un élément selon l'une quelconque des revendications 1 à 16.

## Patentansprüche

1. Element (2) zur Übertragung des Klangs eines Lautsprechers zum Ohr, aufweisend:
einen nahen Abschnitt (3), der versehen ist mit einer oder eine Verbindungseinrichtung bildet, die für eine starre Verbindung mit einer Ausrüstung (1) geeignet ist, die Mittel für eine Festlegung bezüglich des Kopfes eines Trägers aufweist, und
einen fernen Abschnitt (4), der geeignet ist, den Ton in die äußere Hörleitung (CAE) zu leiten, wobei der ferne Abschnitt (4) ein fernes Ende (4a) aufweist, das in der Lage ist, sich in der Ohrmuschel (C) zu platzieren gegenüber dem äußeren Gehörgang, und von Mitteln frei ist, die eine Festlegung durch Kontakt mit einem beliebigen Abschnitt des Ohres erzeugen,
**dadurch gekennzeichnet, dass**
entlang wenigstens eines Abschnitts seines fernen Endes (4a) das Element (2) an ein bewegliches Teil (11) angefügt ist, das eine Vertiefung (13) aufweist, die eine hohle Kammer bildet, die sich zu der Ohrmuschel (C) öffnet,
das Element (2) und das Teil (11) gegenseitige männliche - und weibliche Verbindungsmittel (10, 12) oder umgekehrt aufweisen, die die zeitweise Vereinigung des einen mit dem anderen ermöglichen,
die gegenseitigen Verbindungsmittel durch eine Stange (10), die von der Seitenwand des Elements (2) vorspringt und einem Kanal (12) gebildet werden, der in der Seitenwand des Teils (11) ausgebildet ist, wobei die Stange geeignet ist, unter sanfter Reibung in dem Kanal aufgenommen zu werden,
wobei die Bezeichnungen nah und fern sich auf die relative Position bezüglich der Ausrüstung beziehen.

2. Element nach Anspruch 1, **dadurch gekennzeichnet, dass** im Betrieb das ferne Ende (4a) seines fernen Abschnitts (4) im Wesentlichen senkrecht zur Kieferebene des Trägers verläuft.

3. Element nach Anspruch 1 oder 2, **dadurch gekennzeichnet, dass** es hohl ist und dass der Lautsprecher auf der Seite des nahen Endes des nahen Abschnitts (3) des Elements angeordnet ist.

4. Element nach einem der Ansprüche 1 bis 3, **dadurch gekennzeichnet, dass** das ferne Ende (4a) seines fernen Abschnitts (4) einen teilbaren Abschluss umfasst.

5. Element nach einem der Ansprüche 1 bis 3, **dadurch gekennzeichnet, dass** es auf der fernen Seite ein bewegbares Endstück (4b) umfasst, das mit dem nahen Nebenabschnitt (3b) verbindbar ist.

6. Element nach Anspruch 5, **dadurch gekennzeichnet, dass** das Endstück (4b) drehbar um die Längsachse (X-X') des Nebenabschnitts (3b) angebracht ist.

7. Element nach Anspruch 1 oder 2, **dadurch gekennzeichnet, dass** es gefüllt ist und dass der Lautsprecher (9) auf der Seite des fernen Endes (4a) des fernen Abschnitts (4) des Elements platziert ist.

8. Element nach einem der Ansprüche 1 bis 7, **dadurch gekennzeichnet, dass** es einen Querschnitt von zwischen 3,2 und 40 mm² aufweist.

9. Element nach einem der Ansprüche 1 bis 8, **dadurch gekennzeichnet, dass** es unter der Einwirkung einer vorsätzlich ausgeübten Kraft zur Anpassung an den Träger verformbar ist, jedoch unter normalen Betriebsbedingungen die Form, die ihm somit durch Verformung verliehen wurde, beibehält.

10. Element nach Anspruch 9, **dadurch gekennzeichnet, dass** es aus einem thermoplastischen Material gebildet ist.

11. Element nach Anspruch 9, **dadurch gekennzeichnet, dass** es aus einem nachgiebigen Material gebildet ist, das eine verformbare Armatur einschließt.

12. Element nach einem der Ansprüche 1 bis 11, **dadurch gekennzeichnet, dass** der Boden (14) des Hohlraums (13) im Wesentlichen teilkugelförmig ist.

13. Element nach einem der Ansprüche 1 bis 12, **dadurch gekennzeichnet, dass** die Seitenwand des Teils (11) von einem engen Kanal (16) durchquert ist, der den Hohlraum (13) und die Umgebung auf der gegenüberliegenden Seite zu der Ohrmuschel (C) in Verbindung setzt.

14. Element nach einem der Ansprüche 1 bis 13, **dadurch gekennzeichnet, dass** der Kanal (12) durchquerend ist und dass die Stange (10) eine Länge derart aufweist, dass sie ausreichend über den Kanal hervorsteht, um als Verbindungsmittel zu einem weiteren Zusatz (17) zu dienen.

15. Element nach Anspruch 14, **dadurch gekennzeichnet, dass** der andere Zusatz (17) eine Schallisolierungsfläche bildet.

16. Element nach einem der Ansprüche 1 bis 15, **dadurch gekennzeichnet, dass** die Seitenwand des Teils (11) elektronische Bauteile einschließt.

17. Elektronischer Zweig oder Brillengestell, das einen derartigen Zweig aufweist, **dadurch gekennzeichnet, dass** es mit einem Element nach einem der Ansprüche 1 bis 16 ausgerüstet ist.

18. Ohrenklappe, ausgerüstet mit einem Element nach einem der Ansprüche 1 bis 16.

19. Ohrring, ausgerüstet mit einem Element nach einem der Ansprüche 1 bis 16.

20. Kopfband, Haarreif, Kopfhörer oder Sichtschutz, ausgerüstet mit einem Element nach einem der Ansprüche 1 bis 16.

21. Schutzhelm, ausgerüstet mit einem Element nach einem der Ansprüche 1 bis 16.

22. Hörgerät, ausgerüstet mit einem Element nach einem der Ansprüche 1 bis 16.

## Claims

1. A member (2) for transmitting the sound of a loudspeaker to the ear, comprising:
a proximal part (3) provided with, or forming, a means of attachment suitable for a rigid connection to an equipment (1) comprising means for immobilizing it relative to the head of a wearer, and
a distal part (4) suitable for directing the sound into the external auditory canal (CAE), said distal part (4) having a distal end (4a) suitable to be positioned in the concha (C) of the ear, facing the entrance to the external auditory canal, and having no means of immobilizing it by contact with any part of the ear,
**characterized in that**
along at least a part of its distal end (4a), said member (2) and a component (11), that has a cavity (13) forming a hollow chamber opening toward said concha (C), are placed side by side,
said member (2) and said component (11) comprising male/female, or female/male means of mutual connection (10, 12) allowing the temporary connection of one to the other,
said means of mutual connection consist of a rod (10) projecting from the wall of said member (2) and a passage (12) formed in the wall of said component (11), said rod being such that it can be received with slight friction in said passage,
the adjectives proximal and distal referring to the relative position with respect to said equipment.

2. A member as claimed in claim 1, **characterized in that**, in service, the distal end (4a) of its distal part (4) is approximately orthogonal to the temporo-mandibular plane of the wearer.

3. A member as claimed in claim 1 or 2, **characterized in that** it is hollow and **in that** said loudspeaker is positioned toward the proximal end of the proximal part (3) of the member.

4. A member as claimed in any one of claims 1 to 3, **characterized in that** the distal end (4a) of its distal part (4) includes a breakable termination.

5. A member as claimed in any one of claims 1 to 3, **characterized in that** it includes, toward the distal end, a removable coupling end (4b) attachable to the adjoining proximal part (3b) of said member.

6. A member as claimed in claim 5, **characterized in that** said coupling end (4b) is mounted in such a way as to be rotatable about the longitudinal axis (X-X') of said adjoining part (3b).

7. A member as claimed in claim 1 or 2, **characterized in that** it is solid and **in that** said loudspeaker (9) is positioned toward the distal end (4a) of the distal part (4) of the member.

8. A member as claimed in any one of claims 1 to 7, **characterized in that** it has a cross section of between 3.2 and 40 mm².

9. A member as claimed in any one of claims 1 to 8, **characterized in that** when a force is deliberately applied, it is deformable for the purposes of adapting it to the wearer, but retains, under normal service conditions, the shape thus given to it by deformation.

10. A member as claimed in claim 9, **characterized in that** it is made of a thermoplastic.

11. A member as claimed in claim 9, **characterized in that** it is made of a flexible material containing a deformable reinforcement.

12. A member as claimed in any one of claims 1 to 11, **characterized in that** the closed side (14) of said cavity (13) is shaped approximately as a portion of a sphere.

13. A member as claimed in any one of claims 1 to 12, **characterized in that** the wall of the component (11) is interrupted by a narrow passage (16) connecting said cavity (13) to the surrounding environment in the direction away from said concha (C).

14. A member as claimed in any one of claims 1 to 13, **characterized in that** said passage (12) is a through passage and **in that** said rod (10) is of a length such that it protrudes sufficiently from said passage to serve as means of connection to another accessory (17).

15. A member as claimed in claim 14, **characterized in that** said other accessory (17) forms a sound isolating surface.

16. A member as claimed in any one of claims 1 to 15, **characterized in that** the wall of the component (11) contains electronic components.

17. An electronic arm, or frame of eye glasses comprising such an arm, **characterized in that** it is equipped with a member as claimed in any one of claims 1 to 16.

18. An earphone equipped with a member as claimed in any one of claims 1 to 16.

19. An earring equipped with a member as claimed in any one of claims 1 to 16.

20. A headband, bow for the hair, headset or visor equipped with a member as claimed in any one of claims 1 to 16.

21. A protective helmet equipped with a member as claimed in any one of claims 1 to 16.

22. A hearing aid equipped with a member as claimed in any one of claims 1 to 16.
